(19) Europäisches Patentamt

European Patent Office

Office européen des brevets

(11) **EP 1 087 512 A2**

(12) **EUROPÄISCHE PATENTANMELDUNG**

(43) Veröffentlichungstag:
    28.03.2001  Patentblatt 2001/13

(51) Int. Cl.$^7$: **H02M 7/48**

(21) Anmeldenummer: **00117969.6**

(22) Anmeldetag: **22.08.2000**

(84) Benannte Vertragsstaaten:
    **AT BE CH CY DE DK ES FI FR GB GR IE IT LI LU MC NL PT SE**
    Benannte Erstreckungsstaaten:
    **AL LT LV MK RO SI**

(30) Priorität: **02.09.1999 DE 19941813**
    **02.06.2000 DE 10027575**

(71) Anmelder: **ABB PATENT GmbH**
    **68309 Mannheim (DE)**

(72) Erfinder: **Teichmann, Ralph**
    **01139 Dresden (DE)**

(74) Vertreter: **Miller, Toivo et al**
    **ABB Patent GmbH**
    **Postfach 10 03 51**
    **68128 Mannheim (DE)**

(54) **ARCP Mehrpunktstromrichter mit potientialvariablen Zwischenkreiskapazitäten**

(57)     Es wird ein ARCP Dreipunkt- oder Mehrpunktstromrichter vorgeschlagen

- mit einer Reihenschaltung von mindestens vier Hauptschaltern ($S_1...S_8$) pro Stromrichterphase, welche elektrisch parallel zwischen einer positiven und einer negativen Gleichspannungsschiene (2, 4) geschalten sind,
- wobei elektrisch parallel zu jedem einzelnen Hauptschalter ($S_1...S_8$) eine einzelne Entlastungskapazität ($C_1...C_8$) geschalten ist,
- wobei zwischen den Gleichspannungsschienen (2, 4) zwei gleich große Zwischenkreiskapazitäten ($C_{DC1}$, $C_{DC2}$) angeordnet sind, deren Spannungsmittelpunkt (0) verfügbar ist,
- wobei die Verbindungspunkte (7, 17, 27, 9, 19, 49) jeweils benachbarter Hauptschalter ($S_1...S_8$), welche nicht gleichzeitig den Ausgang (10) der Stromrichterphase bilden, über potentialvariable Zwischenkreiskapazitäten zur Bildung von Kommutierungszellen in hinsichtlich der positiven und negativen Gleichspannungsschiene (2, 4) symmetrischer Weise miteinander verbunden sind,

- wobei jede potentialvariable Zwischenkreiskapazität in zwei gleich große Teilkapazitäten ($C_{DC3}$ und $C_{DC4}$, $C_{DC5}$ und $C_{DC6}$, $C_{DC7}$ und $C_{DC8}$) aufgeteilt ist, deren Verbindungpunkte als Spannungsmittelpunkte (1, 3, 5) verfügbar sind,
- wobei der Ausgang (10) der Stromrichterphase mit einer Resonanz-Induktivität ($L_{aux}$) verbunden ist, deren weiterer Anschluß jeweils über einen eigenen unabhängig steuerbaren bidirektionalen Hilfsschalter ($S_{aux1}$, $S_{aux2}$, $S_{aux3}$, $S_{aux4}$) mit allen Spannungsmittelpunkten (0, 1, 3, 5) verbunden ist.

Fig. 9

EP 1 087 512 A2

**Beschreibung**

Die Erfindung bezieht sich auf einen ARCP (Auxiliary Resonant Commutated Pole) Mehrpunktstromrichter mit potentialvariablen Zwischenkreiskapazitäten und damit auf Schaltungen der Leistungselektronik, insbesondere weich schaltende Mehrpunktstromrichtertopologien für Hochleistungsstromrichter.

Hart schaltende Mehrpunktstromrichter mit potentialveränderlichen Zwischenkreiskapazitäten, wie sie z.B. von T. Meynard et al. in dem Patent WO9302501 vorgeschlagen wurden, werden im Hochleistungsbereich zur Steuerung von Drehstromantrieben bzw. bei Energieübertragungsanlagen zur Netzkopplung und Kompensation eingesetzt. Das Mehrpunktstromrichterkonzept hat sich insbesondere bei hohen Spannungsebenen bewährt, bei denen die maximale Sperrspannung eines heute verfügbaren einzelnen Halbleiterventiles nicht ausreicht. Im Gegensatz zu den Mehrpunktstromrichtertopologien mit Null- oder Begrenzerdioden, wie sie zum Beispiel von A. Nabae et al. in "A New Neutral Point Clamped PWM Inverter", IEEE Transactions of Industry Applications, Vol-IA-17, No. 5 beschrieben wurden, werden in der von Meynard et al. vorgeschlagenen Mehrpunktstromrichtertopologie die verschiedenen Ausgangsspannungsniveaus an einem Stromrichterzweig durch geschicktes Zusammenschalten verschieden geladener Zwischenkreiskapazitäten erzielt. Die Vorteile dieser Topologie machen sich insbesondere bei Mehrpunktstromrichtern mit mehr als drei Punkten bemerkbar, bei denen die Anzahl und die erforderliche Sperrspannungsbelastung der Null- bzw. Begrenzerdioden in einer Topologie gemäß Nabae et al. stark zunimmt.

Gegenwärtig werden in den Mehrpunktstromrichtern mit Spannungszwischenkreis im hohen Leistungsbereich GTO Schalter mit Inversdioden eingesetzt. Bei dieser Konfiguration müssen die maximal auftretenden Stromanstiege di/dt und Spannungsanstiege du/dt durch passive Begrenzernetzwerke begrenzt werden, um eine Zerstörung der Halbleiterventile zu vermeiden. Diese Netzwerke sind oft stark verlustbehaftet und tragen wesentlich zur Stromrichterkomplexität und zu den Stromrichterkosten bei.

Die maximal erreichbare Schaftfrequenz in diesen Hochleistungsstromrichtern ist begrenzt durch die im Halbleiter auftretenden Schaltverluste und die minimalen Schaft- und Erholzeiten der Halbleiterbauelemente. Da die Schaltfrequenz direkten Einfluß auf die Qualität der elektrischen Eingangs- und Ausgangsgrößen und somit auf das gesamte Systemdesign hat, ist die erreichbare Schaltfrequenz ein wesentliches Gütekriterium für einen Stromrichter.

Fortschritte in der Leistungshalbleiterentwicklung ermöglichen heute einen Stromrichterbetrieb mit wesentlich höherem di/dt und du/dt, was eine beträchtliche Verkleinerung oder sogar den Verzicht auf die Begrenzernetzwerke zur Folge hat. Die gegenwärtige Grenze in der erreichbaren Schaltfrequenz ist somit im wesentlichen nur noch durch die maximal zulässigen Halbleiterverluste gegeben.

Zur Erhöhung der maximalen Schaltfrequenz in Stromrichtern im kleinen und mittleren Leistungsbereich wurden verschiedene weich schaltende Stromrichtertopologien vorgestellt, die eine wesentliche Reduktion der Schaltverluste ermöglichen. Insbesondere das im Patent US5047913 von R. De Doncker et al. vorgeschlagene "Auxiliary Resonant Commutated Pole" (ARCP) Prinzip für Zweipunktstromrichter eignet sich sehr gut zur Reduzierung von Schaltverlusten. Bei einem solchen ARCP Stromrichter ist jedem Hauptschalter ein Entlastungskondensator elektrisch parallel geschaltet. Außerdem ist eine Hilfsschaltung, bestehend aus einem Hilfsschalter, der elektrisch in Reihe mit einer Resonanz-Induktivität geschaltet ist, vorgesehen, die einen Mittelpunkt eines Gleichspannungs-Zwischenkreiskondensators mit dem Ausgangsanschluß der Stromrichterphase verbindet. Alle Hauptschalter arbeiten im Nullspannungsbetrieb, während alle Hilfsschalter im Nullstrombetrieb arbeiten.

Neben der drastischen Reduzierung der Schaltverluste ermöglicht das ARCP Prinzip auch eine Steuerung der maximalen Strom- bzw. Spannungsanstiegs-Geschwindigkeit über die Wahl der resonanten Elemente, was neben der Möglichkeit des Einsatzes kritischer Halbleiterschalter bzw. Kombinationen von Halbleiterschaltern (z. B. Serienschaltung) auch eine Reduzierung der Beanspruchung der Isolation der Endwindungen in Drehstrommotoren mit sich bringt.

Ansätze der Erweiterung dieses ARCP Prinzips auf Dreipunktstromrichter mit potentialvariablen Kapazitäten wurden von Dijkhuizen et al. auf der IEEE Konferenz IAS 98 und von Deschamps et al. bzw. von Yuan et al. auf der brasilianischen Leistungselektronik-Konferenz COBEP 97 gezeigt. In diesen Lösungen ist der Stromrichterausgang mit einer Resonanz-Induktivität verbunden, die entweder auf die positive oder die negative Gleichspannungs-Zwischenkreisschiene (Deschamps) oder über einen zusätzlichen Transformator auf den Spannungsmittelpunkt des Gleichspannungs-Zwischenkreiskondensators im Dreipunktstromrichter (Yuan) geschalten wird. Der wesentliche Nachteil in der Anordnung von Deschamps ist, daß ein unsymmetrischer Umladevorgang stattfindet, d. h. der Betrag der Spannung über der Resonanz-Induktivität am Beginn des resonanten Umladevorgangs entspricht nicht dem Betrag der Spannung zum Ende der resonanten Kommutierung. Zusätzliche verlustbehaftete Schaltvorgänge im Hilfszweig während der resonanten Kommutierung sind notwendig, um ein Abklingen des Stromes im Hilfszweig zu erreichen. Der wesentliche Nachteil in der Anordnung nach Yuan ist der hohe Bauelementeaufwand. Insbesondere die Fertigung der Hochfrequenztransformatoren im Hilfszweig, welche mit einem hohen Resonanzstrom belastet werden, ist für eine breite Anwendung dieser Topologie zu komplex und zu teuer.

Der Erfindung liegt die Aufgabe zugrunde, einen ARCP Mehrpunktstromrichter mit potientialvariablen Kapazitäten anzugeben, der aufgrund der Anordnung weniger zusätzlicher Schaltelemente einen symmetrischen resonanten Umladevorgang ermöglicht, um somit einen Nullstrombetrieb der Hilfsschalter und einen Nullspannungsbetrieb der Hauptschalter ohne verlustbehaftete Schaltvorgänge bzw. ohne transformatorische Übertrager zu erzielen.

Die Aufgabe wird gemäß einer ersten Ausführungsform erfindungsgemäß gelöst durch einen ARCP Dreipunkt- oder Mehrpunktstromrichter

- mit einer Reihenschaltung von mindestens vier Hauptschaltern pro Stromrichterphase, welche elektrisch parallel zwischen einer positiven und einer negativen Gleichspannungsschiene geschalten sind,
- wobei elektrisch parallel zu jedem einzelnen Hauptschalter eine einzelne Entlastungskapazität geschalten ist,
- wobei zwischen den Gleichspannungsschienen zwei gleich große Zwischenkreiskapazitäten angeordnet sind, deren Spannungsmittelpunkt verfügbar ist,
- wobei die Verbindungspunkte jeweils benachbarter Hauptschalter, welche nicht gleichzeitig den Ausgang der Stromrichterphase bilden, über potentialvariable Zwischenkreiskapazitäten zur Bildung von Kommutierungszellen in hinsichtlich der positiven und negativen Gleichspannungsschiene symmetrischer Weise miteinander verbunden sind,
- wobei jede potentialvariable Zwischenkreiskapazität in zwei gleich große Teilkapazitäten aufgeteilt ist, deren Verbindungpunkte als Spannungsmittelpunkte verfügbar sind,
- wobei der Ausgang der Stromrichterphase mit einer Resonanz-Induktivität verbunden ist, deren weiterer Anschluß jeweils über einen eigenen unabhängig steuerbaren bidirektionalen Hilfsschalter mit allen Spannungsmittelpunkten verbunden ist.

Die Aufgabe wird gemäß einer zweiten Ausführungsform erfindungsgemäß gelöst durch einen ARCP Mehrpunktstromrichter

- mit einer Reihenschaltung von mehr als vier Hauptschaltern pro Stromrichterphase, welche elektrisch parallel zwischen einer positiven und einer negativen Gleichspannungsschiene geschalten sind,
- wobei elektrisch parallel zu jedem einzelnen Hauptschalter eine einzelne Entlastungskapazität geschalten ist,
- wobei zwischen den Gleichspannungsschienen zwei gleich große Zwischenkreiskapazitäten angeordnet sind, deren Spannungsmittelpunkt verfügbar ist,
- wobei die Verbindungspunkte jeweils benachbarter Hauptschalter, welche nicht gleichzeitig den Ausgang der Stromrichterphase bilden, über potentialvariable Zwischenkreiskapazitäten zur Bildung von Kommutierungszellen in hinsichtlich der positiven und negativen Gleichspannungsschiene symmetrischer Weise miteinander verbunden sind,
- wobei jede potentialvariable Zwischenkreiskapazität in zwei gleich große Teilkapazitäten aufgeteilt ist, deren Verbindungpunkte als Spannungsmittelpunkte verfügbar sind,
- wobei der Spannungsmittelpunkt der Zwischenkreiskapazitäten über einen unabhängig steuerbaren bidirektionalen Hilfsschalter und eine Resonanz-Induktivität mit dem Spannungsmittelpunkt der nächstliegenden Kommutierungszelle verbunden ist, der Ausgang der Stromrichterphase über einen unabhängig steuerbaren bidirektionalen Hilfsschalter und eine Resonanz-Induktivität mit dem Spannungsmittelpunkt der nächstliegenden Kommutierungszelle verbunden ist und die Spannungsmittelpunkte jeweils benachbarter Kommutierungszellen über einen unabhängig steuerbaren bidirektionalen Hilfsschalter und eine Resonanz-Induktivität miteinander verbunden sind.

Die Aufgabe wird gemäß einer dritten Ausführungsform erfindungsgemäß gelöst durch einen ARCP Dreipunkt- oder Mehrpunktstromrichter

- mit einer Reihenschaltung von mindestens vier Hauptschaltern pro Stromrichterphase, welche elektrisch parallel zwischen einer positiven und einer negativen Gleichspannungsschiene geschalten sind,
- wobei elektrisch parallel zu jedem einzelnen Hauptschalter eine einzelne Entlastungskapazität geschalten ist,
- wobei zwischen den Gleichspannungsschienen mindestens drei Zwischenkreiskapazitäten angeordnet sind, deren Kapazitätswerte derart gewählt sind, daß Spannungsabgriffe entstehen, deren Spannungsniveaus in der Mitte der am Ausgang der Stromrichterphase einstellbaren Spannungsniveaus liegen,
- wobei die Verbindungspunkte jeweils benachbarter Hauptschalter, welche nicht gleichzeitig den Ausgang der Stromrichterphase bilden, über potentialvariable Zwischenkreiskapazitäten zur Bildung von Kommutierungszellen in hinsichtlich der positiven und negativen Gleichspannungsschiene symmetrischer Weise miteinander verbunden sind,
- wobei der Ausgang der Stromrichterphase mit einer Resonanz-Induktivität verbunden ist, deren weiterer Anschluß jeweils über einen eigenen unabhängig steuerbaren bidirektionalen Hilfsschalter mit allen Spannungsabgriffen verbunden ist.

Durch die Anordnung mehrerer Stromrichterphasen,

- die jeweils elektrisch parallel zu einem mit einem Kondensator abgestützten Gleichspannungs-Zwischenkreis geschaltet sind,
- jeweils $2(n-1)$ in Serie geschaltete aktive Hauptschalter aufweisen ($n$ = Anzahl der Stromrichterpunkte bzw. Anzahl der möglichen Ausgangsspannungsniveaus), die den positiven mit den negativen Anschluß der Gleichspannungs-Zwischenkreiskapazität verbinden,
- jeweils einen Ausgangsanschluß für die Stromrichterphase an dem Verbindungspunkt des $(n-1)$-ten und des $n$-ten Hauptschalters verzeichnen,
- jeweils $(n-2)$ potentialvariable Zwischenkreiskapazitäten besitzen, deren positive Anschlußpunkte in der Kette der in Serie geschalteten Hauptschalter am Verbindungspunkt zwischen den Schaltern $(n-1-k)$ und $(n-2-k)$ und deren negative Anschlußpunkte am Verbindungspunkt der Hauptschalter $(n+k)$ und $(n+1+k)$ mit $k=0 ... (n-3)$ angeschlossen werden,

erhält man den Aufbau eines mehrphasigen Mehrpunktstromrichters mit potentialvariablen Zwischenkreiskapazitäten.

Ausgehend von dieser hart schaltenden Mehrpunktstromrichtertopologie mit potentialvariablen Zwischenkreiskapazitäten wird die gewünschte weich schaltende ARCP Mehrpunktstromrichtertopologie mit potentialvariablen Zwischenkreiskapazitäten durch folgende Modifikationen und Erweiterungen erzielt:

1. Für jede Stromrichterebene muß durch eine Serienschaltung von zwei Kapazitäten oder alternativen Spannungsquellen dafür gesorgt werden, daß ein Spannungsmittelpunkt bezüglich der Stromrichterebene zur Verfügung steht. Dies erfolgt im Fall des Mehrpunktstromrichters mit potentialvariablen Zwischenkreiskapazitäten durch eine entsprechende Aufteilung der Hauptkapazität im Gleichspannungszwischenkreis bzw. der potentialvariablen Zwischenkreiskapazitäten.

2. Der Ausgang der Stromrichterphase muß durch eine Reihenschaltung einer Resonanz-Induktivität und eines unabhängig steuerbaren bidirektionalen Hilfsschalters mit dem Spannungsmittelpunkt der innersten potentialvariablen Zwischenkreiskapazität verbunden werden. Die Spannungsmittelpunkte aller potentialvariablen Zwischenkreiskapazitäten müssen durch eine Reihenschaltung einer Resonanz-Induktivität und eines unabhängig steuerbaren bidirektionalen Hilfsschalters mit dem Mittelpunkt der bezogen auf die Zwischenkreisspannung nächst darüber liegenden potentialvariablen Zwischenkreiskapazität bzw. mit dem Spannungsmittelpunkt der Gleichspannungs-Zwischenkreiskapazität verbunden werden. Sind keine Spannungsmittelpunkte an den potentialvariablen Zwischenkreiskapazitäten vorgesehen, erfolgt die Ankopplung der mit der resonanten Induktivität verbundenen bidirektionalen Hilfsschalter an den Spannungsabgriffen der geteilten Gleichspannungs-Zwischenkreiskapazität.

3. Parallel zu jedem Hauptschalter muß eine Entlastungskapazität angebracht werden.

Somit erhält man vorteilhaft einen verlustarmen ARCP Mehrpunktstromrichter, der die Vorteile eines Mehrpunktstromrichters mit potentialvariablen Zwischenkreiskapazitäten mit denen eines ARCP-Stromrichters kombiniert, wobei eine maximale Schaltentlastung erzielt werden kann.

Mit dieser Topologie ist es möglich, den Schaltaugenblick der Hauptschalter der Stromrichterphase frei festzulegen, wodurch herkömmliche Pulsweitenmodulationsverfahren eingesetzt werden können. Die Hauptschalter in dieser ARCP Stromrichterphase schalten bei verschwindender Spannung über diesen Bauelementen ein und aus (Zero-Voltage-Switch-(ZVS)-Prinzip). Die Hilfsschalter in Reihe zur Resonanz-Induktivität werden nach dem Zero-Current-Switch-(ZCS-) Prinzip ebenfalls schaltentlastend betrieben. Beim ZCS-Prinzip wird der Hilfsschalter bei verschwindendem Strom ein- und abgeschaltet. Das heißt, alle in dieser Stromrichterphase verwendeten Halbleiterschalter schalten verlustarm. Die spannungsmäßige Auslegung der Hauptschalter und Hilfsschalter sowie die Betriebsweise der Schalter kann der nachstehenden Tabelle 1 entnommen werden. Die Auslegung der Schalter bzgl. des Nennstromes hängt von den Schaltungsparametern, die den Effektivstrom durch den Schalter bestimmen, und den thermischen und elektrischen Eigenschaften der Schalter ab. Die Vorteile dieser ARCP Mehrpunktstromrichtertopologie mit potentialvariablen Zwischenkreiskapazitäten gegenüber den bisher vorgestellten ARCP Dreipunktstromrichtern sind:

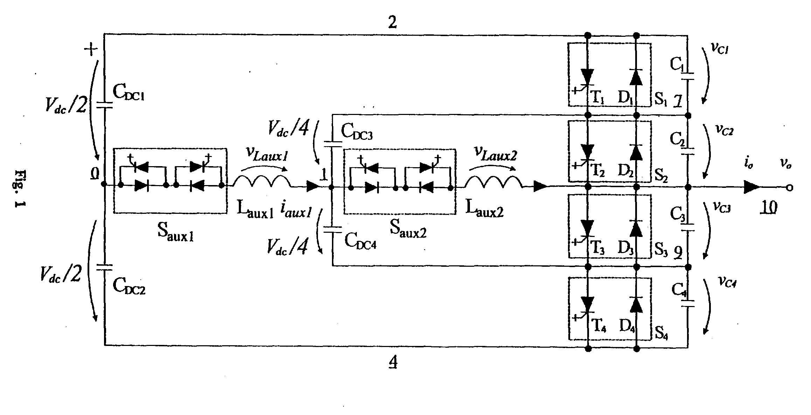

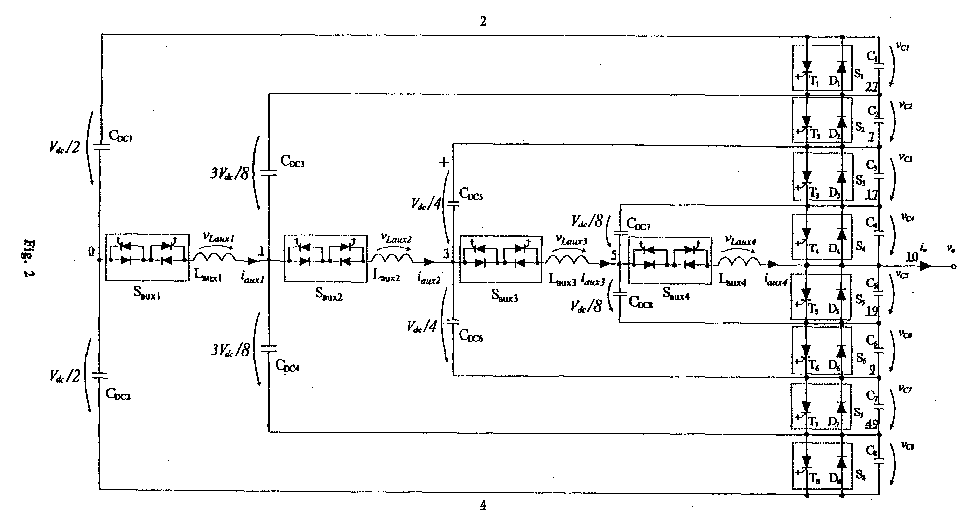

a) symmetrischer Umschwingvorgang, der keine transformatorische Übertrager bzw. keine Boostphasen zu anderem Zweck als zur Kompensation resistiver Verluste benötigt um ein weiches Schalten aller installierten Schalter zu ermöglichen,

b) Sperrspannungsbelastung aller Hilfsschalter in der Vorzugsanordnung (Fig. 1, 2) beträgt nur $V_{dc}/2/(n-1)$,

c) Skalierbarkeit der Topologie auf beliebige Anzahl an Stromrichterpunkten.

Tabelle 1

| Schalterauslegung | | |
|---|---|---|
| | Typ | Erforderliche Sperrspannung |
| Hauptschalter ($S_x$; x=1 ... 2(n-1)) | ZVS | $V_{dc}/(n-1)$ |
| Hilfsschalter ($S_{aux\_y}$; y=1 ... (n-1)) | ZCS | $V_{dc}/2(n-1)$ konstant für Anordnungen gem. Fig. 1, 2<br>$V_{dc}/2/(n-1)...\frac{2(n-1)-1}{2(n-1)} V_{dc}$ : variabel für Anordnungen gem. Fig. 9, 10, 11 |

Zur weiteren Erläuterung der Erfindung wird auf die Zeichnungen Bezug genommen, in denen Ausführungsbeispiele einer Stromrichterphase eines verlustarmen ARCP Mehrpunktstromrichters mit potentialvariablen Zwischenkreiskapazitäten schematisch veranschaulicht sind. Es zeigen:

Fig. 1      eine Ausgangsphase eines ARCP Dreipunktstromrichters mit potentialvariablen Zwischenkreiskapazitäten,

Fig. 2      eine Phase eines ARCP Fünfpunktstromrichters mit potentialvariablen Zwischenkreiskapazitäten, welcher nach den benannten Designrichtlinien entworfen wurde,

Fig. 3      qualitativ den Verlauf der Spannung über den Entlastungskapazitäten $C_1$ bis $C_4$, die Spannung über den Hilfsschaltern $S_{aux1}$ und $S_{aux2}$, sowie die Ausgangsspannung $v_0$ für einen ARCP Dreipunktstromrichter mit potentialvariablen Zwischenkreiskapazitäten und positivem Ausgangsstrom $i_o$,

Fig. 4      die Schaltzustände für die steuerbaren Schalter innerhalb einer Schaltsequenz für einen ARCP Dreipunktstromrichter mit potentialvariablen Zwischenkreiskapazitäten und positivem Ausgangsstrom $i_o$,

Fig. 5      qualitativ den Verlauf der Ströme durch die Hilfsschalter $S_{aux1}$ und $S_{aux2}$, durch die Hauptschalter $S_1$ und $S_2$ sowie durch die Entlastungskapazitäten $C_1$ und $C_2$ für einen ARCP Dreipunktstromrichter,

Fig. 6, 7, 8      Zusammenhänge entsprechend den Fig. 3, 4 und 5, jedoch für ARCP unterstützte kapazitive Kommutierungen für einen ARCP Dreipunktstromrichter mit potentialvariablen Zwischenkreiskapazitäten,

Fig. 9, 10, 11      alternative Ausführungsformen einer ARCP Stromrichterphase mit potentialvariablen Zwischenkreiskapazitäten.

Fig. 1 zeigt den Aufbau einer Ausgangsphase eines Dreipunktstromrichters, bestehend aus einer Reihenschaltung der Hauptschalter $S_1$ bis $S_4$, die elektrisch parallel zu einem Gleichspannungszwischenkreis geschaltet sind, welcher aus einer Reihenschaltung der gleich großen Kapazitäten $C_{DC1}$ und $C_{DC2}$ besteht und damit die positive Gleichspannungsschiene 2 mit der negativen Gleichspannungsschiene 4 verbindet.

Direkt parallel zu jedem Hauptschalter $S_1$ bis $S_4$ sind die Entlastungskapazitäten $C_1$ bis $C_4$ geschaltet. Die Schalter $S_1$ bis $S_4$ bestehen jeweils aus einem aktiv ausschaltbaren Leistungshalbleiter $T_1 ...T_4$, allgemein T mit antiparallel geschalteter Diode $D_1... D_4$, allgemein D (Inversdiode). An den Verbindungspunkten 7 bzw. 9 der Hauptschalter $S_1$ und $S_2$ bzw. der Hauptschalter $S_3$ und $S_4$ ist die potentialvariable Zwischenkreiskapazität, bestehend aus den Teilkapazitäten $C_{DC3}$ bis $C_{DC4}$, geschaltet.

Die Spannungsmittelpunkte 0 bzw. 1 des Gleichspannungs-Zwischenkreiskondensators bzw. der potentialvariablen Zwischenkreiskapazität sowie der Spannungsmittelpunkt 1 und der Ausgang 10 der Stromrichterphase sind jeweils mittels einer Serienschaltung bestehend aus einer Resonanz-Induktivität und eines Hilfsschalters verbunden. Die Hilfsschalter bestehen aus einer Serienschaltung von zwei aktiv ausschaltbaren Leistungshalbleitern mit antiparallelen Dioden, die so miteinander verschaltet sind, daß ein bidirektionaler Schalter entsteht.

Fig. 2 zeigt eine Erweiterung der Ausführungsform in Fig. 1 auf einen ARCP Fünfpunktstromrichter.

Die Ausgangsphase des Fünfpunktstromrichters besteht aus einer Reihenschaltung der Hauptschalter $S_1$ bis $S_8$, die elektrisch parallel zu einem Gleichspannungszwischenkreis geschaltet sind, welcher aus einer Reihenschaltung von zwei gleich großen Kapazitäten $C_{DC1}$ bis $C_{DC2}$ besteht und damit die positive Gleichspannungsschiene 2 mit der negativen Gleichspannungsschiene 4 verbindet.

Die Schalter $S_1$ bis $S_8$ bestehen jeweils aus einem aktiv ausschaftbaren Leistungshalbleiter T mit antiparallel geschalteter Diode D. Die Verbindungpunkte 27 bzw. 49 der Hauptschalter $S_1$ und $S_2$ bzw. der Hauptschalter $S_7$ und $S_8$ sind mit einer potentialvariablen Kapazität verbunden, die aus den Teilkapazitäten $C_{DC3}$ und $C_{DC4}$ gebildet wird. Die Verbindungpunkte 7 bzw. 9 der Hauptschalter $S_2$ und $S_3$ bzw. der Hauptschalter $S_6$ und $S_7$ sind mit einer potentialvariablen Kapazität verbunden, die aus den Teilkapazitäten $C_{DC5}$ und $C_{DC6}$ gebildet wird. Weiterhin sind die Verbindungpunkte 17 bzw. 19 der Hauptschalter $S_3$ und $S_4$ bzw. der Hauptschalter $S_5$ und $S_6$ mit einer potentialvariablen Kapazität verbunden, die aus den Teilkapazitäten $C_{DC7}$ und $C_{DC8}$ gebildet wird.

Die Entlastungskapazitäten $C_1$ bis $C_8$ sind direkt parallel zu den Hauptschaltern $S_1$ bis $S_8$ geschaltet. Zusätzlich sind die Spannungsmittelpunkte 0, 1, 3 und 5 an den potentialvariablen Zwischenkreiskapazitäten sowie der Ausgang der Stromrichterphase jeweils über eine Serienschaltung aus einem bidirektionalen Hilfsschalter und einer Resonanz-Induktivität $L_{aux}$ verbunden. Die Hilfsschalter bestehen aus einer Serienschaltung von zwei aktiv ausschaltbaren Leistungshalbleitern mit antiparallelen Dioden, die so miteinander verschalten sind, daß ein bidirektionaler Schalter entsteht.

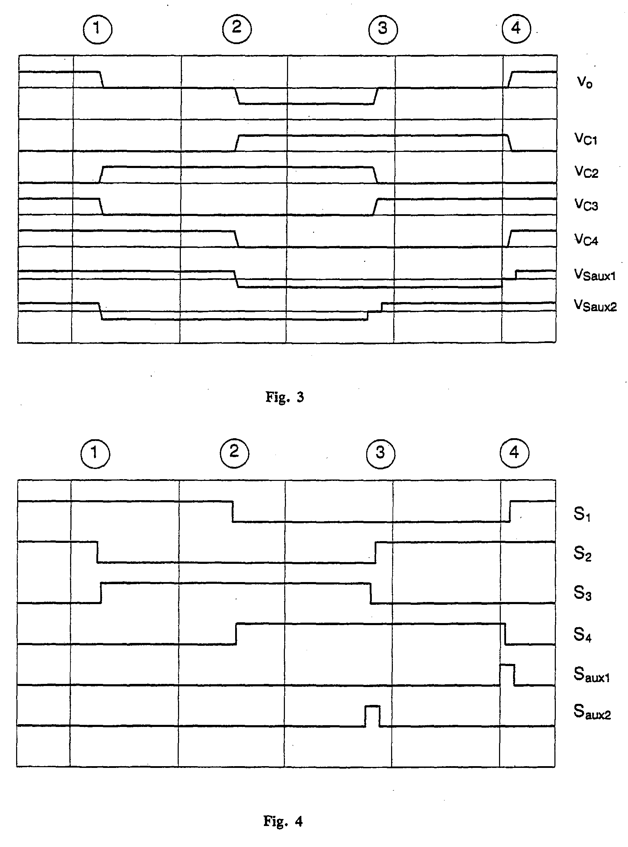

Fig. 3 stellt die Spannungen über den Entlastungskapazitäten $v_{C1}$ bis $v_{C4}$, und damit die Spannungen über den Hauptschaltern $S_1$ bis $S_4$, die Stromrichterausgangsspannung $v_0$ und die Spannung über den Hilfsschaltern $S_{aux1}$ und $S_{aux2}$ für einen ARCP Dreipunktstromrichter mit potentialvariablen Zwischenkreiskapazitäten gemäß Fig. 1 dar. Unter Annahme eines positiven Laststromes $i_0$ ist eine volle Schaltsequenz von der maximalen positiven Ausgangsspannung $v_0$ über die maximale negative Ausgangsspannung $v_0$ und zurück dargestellt. Die ersten beiden Kommutierungen ① ② sind kapazitive Kommutierungen. Die Ausgangsspannung $v_0$ wird mittels zweier ARCP Kommutierungen ③ ④ wieder auf die maximale positive Ausgangsspannung zurückgeschwungen. Der Maßstab einer Teilung der Ordinate entspricht der Größe der Gleichspannung $V_{dc}$ im Gleichspannungszwischenkreis. Die Kommutierungszeiten sind stark von den gewählten Schaltungsparametern abhängig. Alle Verläufe werden im weiteren im Detail beschrieben.

Fig. 4 zeigt die Logikzustände aller Schalter in einer Stromrichterphase des ARCP Dreipunktstromrichters mit potentialvariablen Zwischenkreiskapazitäten korrespondierend zu den in Fig. 3 dargestellten Kommutierungen. Die Hilfsschalter sind nur während der Kommutierungen eingeschaltet und beeinflussen den stationären Betrieb des Stromrichters nicht.

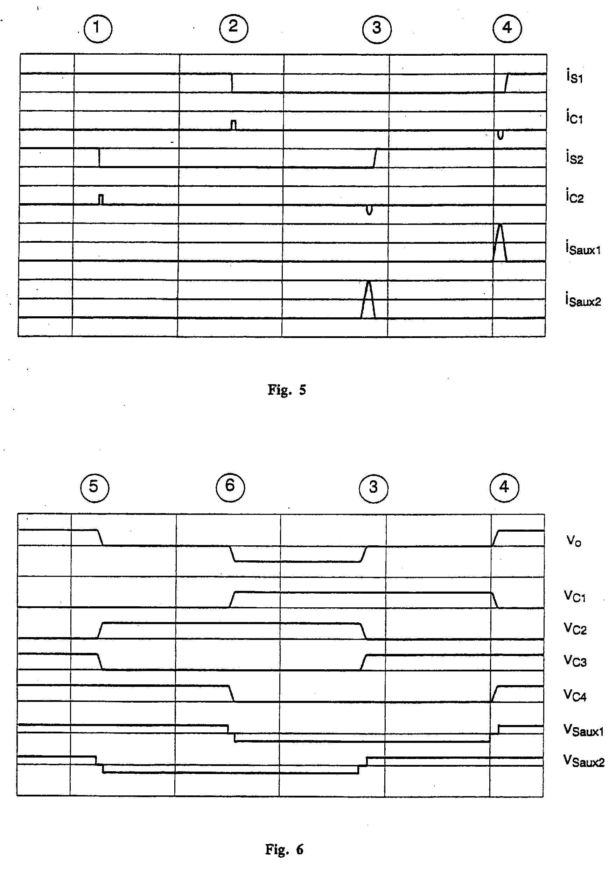

Fig. 5 gibt qualitativ die Stromverläufe durch die Hilfsschalter $S_{aux1}$ und $S_{aux2}$ wieder. Weiterhin sind die Ströme in den Hauptschaltern $S_1$ und $S_2$ sowie den Entlastungskapazitäten $C_1$ und $C_2$ dargestellt. Die Höhe des resonanten Stromes ist durch die Wahl der resonanten Elemente und durch die Höhe des Booststromes beeinflußbar. Eine Ordinatenteilung entspricht der Größe des Ausgangsstrom $i_o$. Der Kommutierungsablauf korrespondiert zu den Beschreibungen für Fig. 3 und Fig. 4.

Fig. 6 entspricht Fig. 3, zeigt jedoch qualitativ den Verlauf der Spannung über den Entlastungskapazitäten und den potentialvariablen Zwischenkreiskapazitäten für eine Schaltsequenz mit ARCP unterstützter kapazitiver Kommutierung für einen ARCP Dreipunktstromrichter mit potentialvariablen Zwischenkreiskapazitäten. Die Ordinatenteilung entspricht der Teilung in Fig. 3. Die ersten beiden Kommutierungen ⑤ ⑥ sind in diesem Fall ARCP unterstützte kapazitive Kommutierungen. Die Kondensatoren werden nicht linear wie in Fig. 3, sondern mit Hilfe einer resonanten Schwingung umgeladen. Die darauffolgenden zwei ARCP Kommutierungen entsprechen qualitativ den ARCP Kommutierungen ③ ④ im Fig. 3. Sowohl die Kommutierungszeiten als auch die Höhe des resonanten Stromes für die ARCP unterstützten kapazitiven Kommutierungen sind stark von den gewählten Schaltungsparametern abhängig.

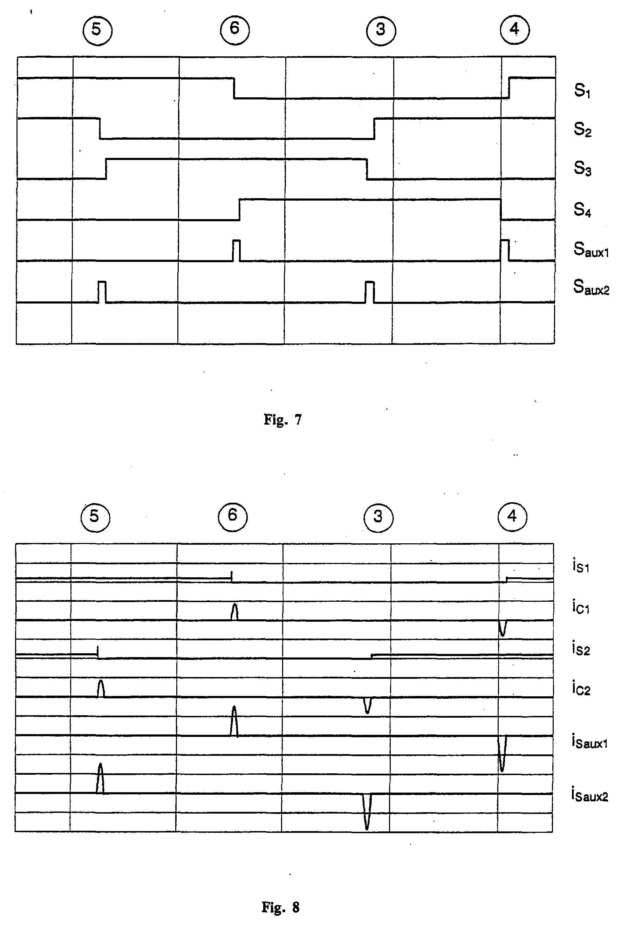

Fig. 7 entspricht Fig. 4 und zeigt die Ansteuerlogik für alle Schalter für die unter Fig. 6 diskutierten Kommutierungen. Auch hier werden die Hilfsschalter $S_{aux1}$ und $S_{aux2}$ nur zu den Kommutierungen aktiviert.

Fig. 8 zeigt qualitativ den Verlauf der in Fig. 5 eingeführten Ströme für die für Fig. 6 diskutierten Kommutierungen. Der Ordinatenmaßstab in dieser Darstellung entspricht 50% dessen in Fig. 5 und der Laststrom $i_0$ entspricht nur 10% des Laststromes in Darstellung gemäß Fig. 5. Deutlich sichtbar sind die gewünschten Stromüberhöhungen in den Hauptschaltern am Beginn der ARCP unterstützten kapazitiven Kommutierung. Alle dargestellten Stromverläufe sind im weiteren beschrieben.

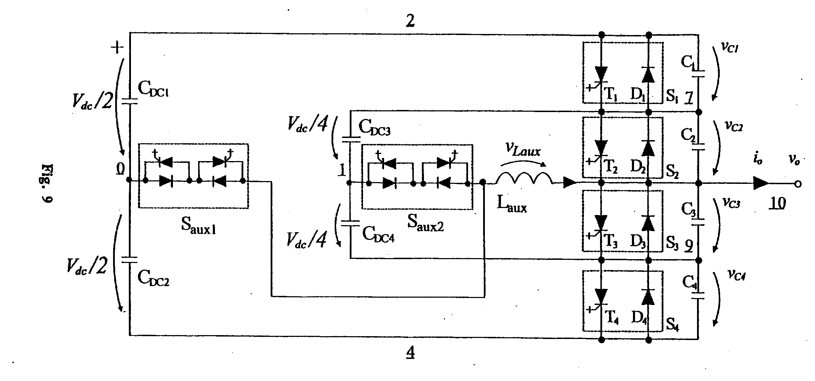

Fig. 9 zeigt eine alternative Ausführungsform einer ARCP Stromrichterphase mit potentialvariablen Zwischenkreiskapazitäten. Gegenüber der Ausführungsform in Fig. 1 ist nur eine Resonanz-Induktivität $L_{aux}$ vorgesehen. Diese wird am Stromrichterausgang angekoppelt und ist jeweils mit einem bidirektionalen Hilfsschalter $S_{aux1}$ bzw. $S_{aux2}$, welche ihrerseits an den Mittelpunkten der potentialvariablen Kapazitäten bzw. am Mittelpunkt 0 der Gleichspannungs-Zwischenkreiskapazität angekoppelt sind, elektrisch in Reihe geschaltet. Die Sperrspannungsbelastung für die bidirektionalen Hilfsschalter in einer Stromrichterphase ist somit nicht gleich. Die maximale Belastung tritt am bidirektionalen Hilfsschalter mit Anschlußpunkt 0 auf und beträgt $V_{dc}/2$. Diese Ausführungsform läßt sich durch Hinzufügen weiterer Hilfsschalter, welche die Mittelpunkte weiterer potentialvariabler Zwischenkreiskapazitäten mit der Resonanz-Induktivität verbinden, auf ARCP Mehrpunkt-Stromrichter mit mehr als 3 Punkten erweitern.

Fig. 10 zeigt am Beispiel einer ARCP Dreipunktstromrichterphase eine weitere alternative Ausführungsform einer ARCP Stromrichterphase mit potentialvariablen Zwischenkreiskapazitäten. Gegenüber den bisher gezeigten Ausführungsformen sind die potentialvariablen Kapazitäten nicht in Teilkapazitäten aufgeteilt. Statt dessen ist die Kapazität im Gleichspannungszwischenkreis in mindestens n Teilkapazitäten untergliedert, an deren Verbindungsstellen (n-1) bidirektionale Hilfsschalter angeschlossen sind. Der zweite Anschluß dieser bidirektionalen Hilfsschalter wird gemeinsam auf eine Resonanz-Induktivität $L_{aux}$ geführt, die mit dem Stromrichterausgang verbunden ist. Eine maximale Sperrspannungsbelastung über den Hilfsschaltern von $3/4V_{dc}$ kennzeichnet diese Topologie.

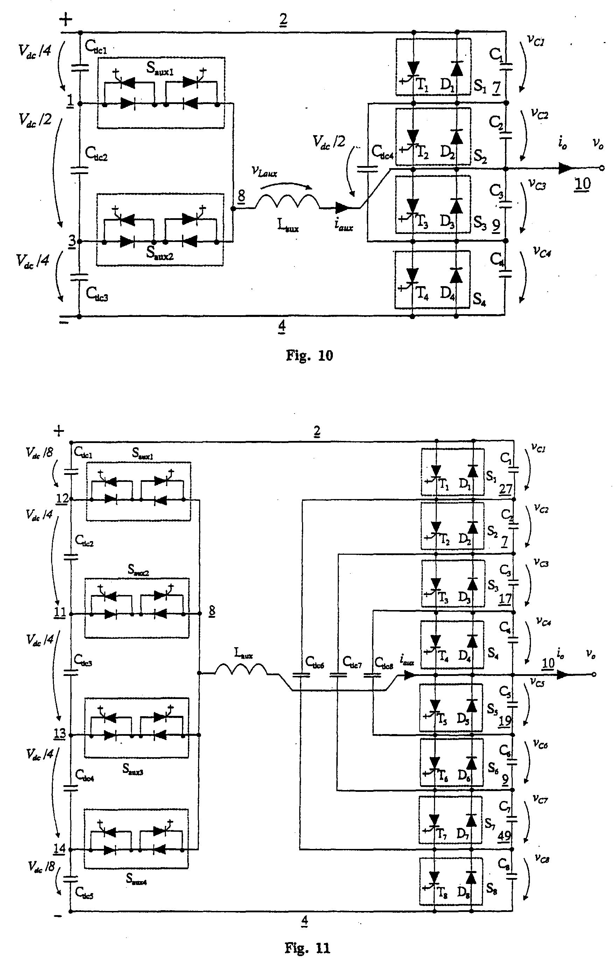

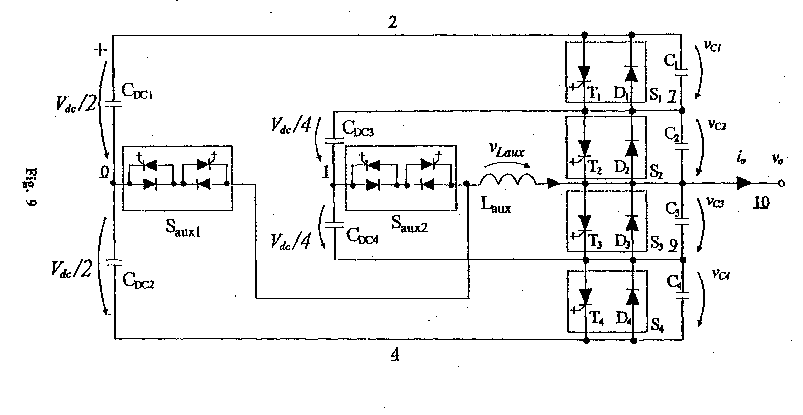

Fig. 11 zeigt eine Erweiterung der Anordnung in Fig. 10 auf einen ARCP Fünfpunktstromrichter mit potentialvariablen Zwischenkreiskapazitäten zur Verdeutlichung der notwendigen Verhältnisse der Teilspannungen über den Teilkapazitäten im Gleichspannungszwischenkreis. Bei der Auslegung der Kondensatoren im Gleichspannungszwischenkreis sind für diese Topologie (n-1) Spannungsabgriffe vorzusehen, die bezüglich des Stromrichtermittelpunkts 0 Spannungen aufweisen, welche dem arithmetischen Mittelwert der vor und nach den Kommutierungen auftretenden Ausgangsspannungen $v_0$ entsprechen. Die maximal auftretende Sperrspannungsbelastung tritt bei den Hilfsschaltern $S_{aux1}$ und $S_{aux4}$ auf und beträgt $7/8V_{dc}$.

Im folgenden soll nun die Funktionsweise an einer Stromrichterphase gemäß Fig. 1 dieses erfindungsgemäßen, verlustarmen ARCP Mehrpunktstromrichters mit potentialvariablen Zwischenkreiskapazitäten anhand der Kommutierungsvorgänge von den oberen Hauptschaltern $S_1$ und $S_2$ auf die unteren Hauptschalter $S_3$ und $S_4$ sowie zurück beschrieben werden. Für Mehrpunktstromrichter mit mehr als drei Punkten sind diese Ausführungen sinngemäß anzuwenden. Für den Betrieb eines Dreipunktstromrichters mit potentialvariablen Zwischenkreiskapazitäten sind die in der nachfolgenden Tabelle 2 gezeigten Schaltzustände maßgebend, um die gewünschten Ausgangsspannungen $v_0$ bezüglich des Stromrichtermittelpunkts 0 (siehe Spalte 2) zu erzielen. Es existieren zwei alternative Schaltzustände, die eine Ausgangsspannung von Null erzeugen. Im folgenden sind die Transitionen $p \rightarrow 0_+ \rightarrow n \rightarrow 0_- \rightarrow p$ beschrieben.

Tabelle 2

| Schaltzustände eines Dreipunktstromrichters mit potentialvariablen Zwischenkreiskapazitäten | | | | | |
|---|---|---|---|---|---|
| Identifikation | Ausgangsspannung | $S_1$ | $S_2$ | $S_3$ | $S_4$ |
| p | $+V_{dc}/2$ | 1 | 1 | 0 | 0 |
| $0_+$ | 0 | 1 | 0 | 1 | 0 |
| $0_-$ | 0 | 0 | 1 | 0 | 1 |
| n | $-V_{dc}/2$ | 0 | 0 | 1 | 1 |

Eine detaillierte Beschreibung der einzelnen Schalttransitionen ist im folgenden für einen positiven Ausgangsstrom $i_0$ gegeben. Die Kommutierungen $p \rightarrow 0$ und $0 \rightarrow n$ sind in dem Fall kapazitive Kommutierungen bzw. ARCP unterstützte kapazitive Kommutierungen und die Kommutierungen $n \rightarrow 0$ und $0 \rightarrow p$ sind ARCP Kommutierungen. Bei relativ kleinem Ausgangsstrom, relativ großen Entlastungskapazitäten bzw. relativ großer Gleichspannung kann es zu ungewollt langen Kommutierungszeiten für die kapazitive Kommutierung kommen. Um die Kommutierungsdauer für die kapazitive Kommutierung zu verkürzen, kann man den ARCP Hilfszweig zur Beschleunigung der Kommutierung nutzen, was zu einer ARCP unterstützten kapazitiven Kommutierung führt.

Nachfolgend wird eine Kommutierung $p \rightarrow 0$ für $i_0 > 0_+$ behandelt:

a) Kapazitive Kommutierung (siehe Bildmarkierung ①):

Vor Beginn der Kommutierung sind die Schalter $S_1$ und $S_2$ geschlossen. Der Ausgangsstrom $i_0$ fließt durch die Schalter $T_1$ und $T_2$. Die Spannung über den Schaltern $S_3$ und $S_4$ ist jeweils $v_{C3} = v_{C4} = V_{dc}/2$. Die Inversdioden $D_3$ und $D_4$ sind damit im Sperrzustand. Die Kommutierung beginnt, wenn der Schalter $T_2$ aktiv ausgeschaltet wird. Der Laststrom $i_0$ kommutiert jeweils zur Hälfte in die Entlastungskapazitäten $C_2$ und $C_3$, die umgeladen werden. Dabei sinkt die Spannung in $C_3$ linear ab, während sie in $C_2$ linear ansteigt. Der gesamte Laststrom wird über die positive Gleichspannungsschiene geführt, da die Hälfte des Laststromes, die durch $C_3$ fließt, über die potentialvariable Zwischenkreiskapazität auch wieder auf die positive Gleichspannungsschiene zurückgeführt wird. Die Spannung über dem Kondensator $C_4$ bleibt wegen des eingeschaltenen Schalters $T_1$ und der relativ konstanten Spannung über dem potentialvariablen Zwischenkreiskondensator, bestehend aus $C_{DC3}$ und $C_{DC4}$, bei $v_{C4} = V_{dc}/2$.
Die Kommutierung der Hauptschalter ist beendet, wenn die Spannung über dem Kondensator $C_3$ den Wert $v_{C3} = 0$ erreicht hat und der Schalter $S_3$ mit der Diode $D_3$ unter ZVS Bedingung einschaltet. Damit ist die Kommutierung abgeschlossen und der "$0_+$" Zustand ist erreicht. Die Schalter $S_1$ und $S_3$ sind eingeschalten und die Spannungen $v_{C2}$ und

$v_{C4}$ betragen jeweils $V_{dc}/2$. Die Hilfsschalter $S_{aux1}$ und $S_{aux2}$ werden für diese Kommutierung nicht aktiviert.

b) ARCP unterstützte kapazitive Kommutierung (siehe Bildmarkierung ⑤ ):

Vor Beginn der Kommutierung sind die Schalter $S_1$ und $S_2$ geschlossen. Der Laststrom $i_0$ fließt durch die Schalter $T_1$ und $T_2$. Die Spannung über den Schaltern $S_3$ und $S_4$ ist jeweils $V_{C3}=V_{C4}=V_{dc}/2$. Die Inversdioden $D_3$ und $D_4$ sind im Sperrzustand.

Der Kommutierungsvorgang wird mit dem Einschalten von $S_{aux2}$ bei $i_{aux2}=0$ (ZCS) gestartet. Wegen der nun negativen Spannung $v_{Laux2}=-V_{dc}/4$ über der Induktivität $L_{aux2}$ kommt es zu einem negativen Stromanstieg $i_{aux2}$ im Hilfszweig. Wenn der Strom in $T_1$ bzw. $T_2$, bestehend aus der Überlagerung des Laststromes $i_0$ mit dem Strom $i_{aux2}$, einen bestimmten frei wählbaren Wert erreicht hat, wird die Kommutierung der Hauptschalter durch aktives Ausschalten von $T_2$ gestartet. Die Stromstärke, bei der das Abschalten erfolgt, wird so gewählt, daß die Kommutierungsdauer innerhalb der gewünschten maximalen Kommutierungsdauer liegt.

Nach dem Ausschalten von $T_2$ kommutiert der Umladestrom, bestehend aus einer Überlagerung von dem Laststrom $i_0$ und dem Strom $i_{aux2}$, in die Kondensatoren $C_2$ und $C_3$ und lädt diese um. Dabei wird der Kondensator $C_2$ nichtlinear geladen, während der Kondensator $C_3$ dementsprechend entladen wird. Beide Hälften des Laststromes werden über die positive Gleichspannungsschiene 2 geführt, während der resonante Anteil nur durch die potentialvariablen Kapazitäten $C_{DC3}$ und $C_{DC4}$ fließt. Die Spannung über der Kapazität $C_4$ wird dabei durch den geschlossenen Schalter $S_1$ und die relativ konstante Spannung über den potentialvariablen Kapazitäten $C_{DC3}$ und $C_{DC4}$ bei $v_{C4}=V_{dc}/2$ gehalten.

Die Kommutierung der Hauptschalter ist beendet, wenn die Spannung über $C_3$ den Wert $v_{C3}=0$ erreicht hat und der Schalter $S_3$ unter ZVS Bedingungen eingeschalten wird. Eine positive Spannung von $v_{Laux2}=V_{dc}/4$ liegt jetzt über der Induktivität $L_{aux2}$ im Hilfszweig, was zu einem positiven Stromgradienten in $i_{aux2}$ führt. Wenn der Strom $i_{aux2}$ den Wert $i_{aux2}=0$ erreicht hat, kann der Schalter $S_{aux2}$ unter ZCS Bedingung ausgeschaltet werden. Damit ist die gesamte Kommutierung beendet und der Stromrichterzweig hat den Zustand "0$_+$" erreicht.

Nachfolgend wird eine Kommutierung $0_+\rightarrow$n für $i_0>0$ behandelt:

a) Kapazitive Kommutierung (siehe Bildmarkierung ② ):

Vor Beginn der Kommutierung sind die Schalter $S_1$ und $S_3$ geschlossen. Der Laststrom $i_0$ fließt durch $T_1$ und die Inversdiode $D_3$. Die Spannung über den Schaltern $S_2$ und $S_4$ ist jeweils $v_{C2}=v_{C4}=V_{dc}/2$. Die Inversdioden $D_2$ und $D_4$ sind damit gesperrt.

Die Kommutierung wird initiiert, indem der Schalter $T_1$ aktiv ausgeschaltet wird. Der Laststrom $i_0$ kommutiert jeweils zur Hälfte in die Kondensatoren $C_1$ und $C_4$, wobei diese umgeladen werden. Dabei steigt die Spannung am Kondensator $C_1$ linear an, während die Spannung am Kondensator $C_4$ linear fällt. Ein Umladen des Kondensators $C_2$ wird anforderungsgemäß durch die potentialvariable Zwischenkreiskapazität, bestehend aus $C_{DC3}$ und $C_{DC4}$, und dem geschlossenen Schalter $S_3$ verhindert, was die Spannung über den Schaltern $S_2$ und $S_3$ konstant auf $v_{C2}=V_{dc}/2$ und $v_{C3}=0$ hält. Die Kommutierung ist beendet, wenn die Spannung über $C_4$ den Wert $v_{C4}=0$ erreicht hat und der Schalter $S_4$ unter ZVS Bedingung eingeschaltet wird. Der Laststrom $i_0$, der während der Kommutierung jeweils zur Hälfte von der positiven Gleichspannungsschiene 2 und der negativen Gleichspannungsschiene 4 getragen wurde, kommutiert nun komplett auf die Inversdioden $D_3$ und $D_4$. Damit ist die Kommutierung beendet und der "n" Zustand mit einer Ausgangsspannung von $V_0=-V_{dc}/2$ wurde erreicht. Die Hilfsschalter $S_{aux1}$ und $S_{aux2}$ werden für diese Kommutierung nicht aktiviert.

b) ARCP unterstützte kapazitive Kommutierung (siehe Bildmarkierung ⑥):

Vor Beginn der Kommutierung sind die Schalter $S_1$ und $S_3$ geschlossen. Der Laststrom $i_0$ fließt durch $T_1$ und die Inversdiode $D_3$. Die Spannung über den Schaltern $S_2$ und $S_4$ ist jeweils $v_{C1}=v_{C4}=V_{dc}/2$. Damit sind die Inversdioden $D_2$ und $D_4$ im Sperrzustand.

Die Kommutierung wird mit dem Einschalten des Hilfsschalters $S_{aux1}$ bei $i_{aux1}=0$ (ZCS) gestartet. Wegen der damit verbundenen negativen Spannung $v_{Laux1}=V_{dc}/4$ über der Induktivität $L_{aux1}$ kommt es zu einem negativen Stromanstieg $i_{aux1}$ im Hilfszweig. Wenn der Strom in $T_1$, bestehend aus der Überlagerung von $i_0$ und $i_{aux1}$, einen bestimmten frei wählbaren Wert erreicht hat, wird die Kommutierung der Hauptschalter durch aktives Ausschalten von $T_1$ gestartet. Die Stromstärke, bei der das Abschalten erfolgt, wird so gewählt, daß die Kommutierungsdauer innerhalb der gewünschten maximalen Kommutierungsdauer liegt.

Da der Hauptschalter $S_3$ eingeschalten bleibt und die Spannung über der potentialvariablen Zwischenkreiskapazität relativ konstant ist, kommutiert der Laststrom $i_0$ mit dem überlagerten Strom $i_{aux1}$ nach dem Ausschalten von $T_1$ in die Kondensatoren $C_1$ und $C_4$ und lädt diese um. Dabei steigt die Spannung am Kondensator $C_1$ nichtlinear an, während die Spannung am Kondensator $C_4$ entsprechend fällt. Die Spannungen über den Kondensatoren $C_2$ und $C_3$ bleiben

jeweils konstant bei $v_{C2}=V_{dc}/2$ und $v_{C3}=0$ (siehe Fig. 6).

Die Kommutierung der Hauptschalter ist beendet, wenn die Spannung über dem Kondensator $C_4$ den Wert $v_{C4}=0$ erreicht hat und der Schalter $S_4$ unter ZVS Bedingungen eingeschalten wurde. Der Umladestrom, bestehend aus Laststrom $i_o$ und Strom $i_{aux1}$, kommutiert nun von der positiven Gleichspannungsschiene, die während der Kommutierung die Hälfte dieses Umladestromes getragen hat, komplett auf die Inversdioden in $S_3$ und $S_4$. Eine positive Spannung von $v_{Laux1}=V_{dc}/4$ liegt jetzt über der Induktivität $L_{aux1}$ im Hilfszweig, die zu einem positiven Stromgradienten in $i_{aux1}$ führt. Wenn der Strom $i_{aux1}$ den Wert $i_{aux1}=0$ erreicht hat, kann der Schalter $S_{aux1}$ unter ZCS Bedingung ausgeschalten werden. Damit ist die gesamte Kommutierung beendet und der Stromrichterzweig hat den Zustand "n" erreicht.

Nachfolgend wird eine Kommutierung n→0 für $i_0>0$ behandelt:

ARCP Kommutierung (siehe Bildmarkierung ③):

Vor Beginn der Kommutierung sind die Schalter $S_3$ und $S_4$ eingeschalten. Der Laststrom $i_0$ fließt durch die Inversdioden $D_3$ und $D_4$. Die Spannung über den Schaltern $S_1$ und $S_2$ ist jeweils $v_{C1}=v_{C2}=V_{dc}/2$. Die Inversdioden $D_1$ und $D_2$ sind damit im Sperrzustand. Die Kommutierung wird mit dem Einschalten des Hilfsschalters $S_{aux2}$ bei $i_{aux2}=0$ (ZCS) gestartet. Wegen der positiven Spannung über der Induktivität $L_{aux2}$, $v_{Laux2}=V_{dc}/4$, kommt es zu einem positiven Stromanstieg $i_{aux2}$ im Hilfszweig. Wenn dieser Strom $i_{aux2}$ einen bestimmten Wert $I_{boost}>0$ mit $I_{boost}=i_{aux2}-i_o$ erreicht hat, wird die Kommutierung durch aktives Ausschalten des Leistungshalbleiters $T_3$ gestartet. Dieser Wert des Booststromes $I_{boost}$ ist frei wählbar, muß aber einen Mindestwert besitzen, der ein vollständiges Umschwingen der Spannung über dem Kondensator $C_2$ auf den Wert $v_{C2}\approx0$ auch bei einem verlustbehafteten, nicht idealen Aufbau garantiert. Die Differenz des Laststromes $i_o$ und des Hilfsstromes $i_{aux2}$ kommutiert in die Kondensatoren $C_2$ und $C_3$, was ein Entladen des Kondensators $C_2$ und ein Laden des Kondensators $C_3$ bewirkt. Während der Laststrom über $S_{aux2}$ $C_{DC4}$ und $S_4$ komplett von der negativen Gleichspannungsschiene 4 getragen wird, fließt der Resonanzstrom nur durch die potentialvariablen Kapazitäten $C_{DC3}$ und $C_{DC4}$, dem Hilfszweig $S_{aux2}/L_{aux2}$ und den Entlastungskapazitäten über den Schaltern $S_2$ und $S_3$. Da die Spannung über der Serienschaltung von $C_{DC3}$ und $C_{DC4}$ relativ konstant ist und der Schalter $S_4$ geschlossen bleibt, bleibt die Spannung über $S_1$ konstant bei $v_{C1}=V_{dc}/2$ (siehe Fig. 3). Wenn die Spannung des Kondensators $C_2$ den Wert $v_{C2}=0$ erreicht hat, wird der Hauptschalter $S_2$ unter ZVS Bedingung eingeschalten. Eine negative Spannung von $v_{Laux2}=-V_{dc}/4$ liegt jetzt über der Induktivität $L_{aux2}$ im Hilfszweig, die zu einem negativen Stromgradienten in $i_{aux2}$ führt. Wenn der Strom $i_{aux2}$ den Wert $i_{aux2}=0$ erreicht hat, kann der Schalter $S_{aux2}$ unter ZCS Bedingung ausgeschalten werden. Damit ist die Kommutierung beendet und der Stromrichterzweig hat den Zustand "$0_-$" erreicht.

Nachfolgend wird die Kommutierung $0_-$→p für $i_o>0$ behandelt:

ARCP Kommutierung (siehe Bildmarkierung ④):

Vor Beginn der Kommutierung sind die Hauptschalter $S_2$ und $S_4$ geschlossen. Der Laststrom $i_o$ fließt durch den Leistungshalbleiter $T_2$ und die Inversdiode $D_4$. Die Spannung über den Schaltern $S_1$ und $S_3$ ist jeweils $v_{C1}=v_{C3}=V_{dc}/2$. Damit sind die Inversdioden $D_1$ und $D_3$ im Sperrzustand.

Das Einschalten des Hilfsschalters $S_{aux1}$ bei $i_{aux1}=0$ (ZCS) startet die Kommutierung. Wegen der positiven Spannung $v_{Laux1}=V_{dc}/4$ über der Hilfsinduktivität $L_{aux1}$ ist ein positiver Stromanstieg beim Strom $i_{aux1}$ zu verzeichnen. Wenn der Strom $i_{aux1}$ einen Wert $I_{boost}>0$ mit $I_{boost}=i_{aux1}-i_0$ erreicht hat, wird die Kommutierung durch aktives Ausschalten des Leistungshalbleiters $T_4$ gestartet. Der minimale Booststrom $I_{boost}$ wird wieder durch die Umschwingbedingung von $v_{C1}\approx0$ bestimmt. Da der Hauptschalter $S_2$ eingeschalten ist und die Spannung über der potentialvariablen Kapazität, bestehend aus der Serienschaltung von $C_{DC3}$ und $C_{DC4}$, relativ konstant ist, kommutiert die Differenz des Laststromes $i_o$ und des Stromes $i_{aux1}$ in die Kondensatoren $C_1$ und $C_4$, was zu einem Laden des Kondensators $C_4$ und einem Entladen des Kondensators $C_1$ führt. Der Laststrom wird in dieser kurzen Kommutierungszeit über $T_2$, $C_{DC3}$ und $S_{aux1}$ zum Mittelpunkt 0 des Stromrichters geführt.

Wenn die Spannung über $C_1$ den Wert $v_{C1}=0$ erreicht hat, wird der Hauptschalter $S_1$ unter ZVS Bedingungen eingeschalten. Damit werden die Spannungen der Kondensatoren $C_1$ und $C_4$ auf $v_{C1}=0$ bzw. $v_{C4}=V_{dc}/2$ (siehe Fig. 3) gehalten. Eine negative Spannung $v_{Laux1}=-V_{dc}/4$ liegt nun über dem Hilfszweig, die zu einem negativen Gradienten im Strom $i_{aux1}$ führt. Wenn der Strom $i_{aux1}$ den Wert $i_{aux1}=0$ erreicht hat, kann der Hauptschalter $S_{aux1}$ unter ZCS Bedingungen ausgeschalten werden. Damit ist die Kommutierung beendet und der Stromrichterzweig hat den Zustand "p" erreicht.

Die Kommutierungen für negative Ausgangsströme $i_0<0$ sind wegen der symmetrischen Struktur analog, jedoch sind jetzt die Transitionen p→0 und 0→n ARCP Kommutierungen und die Transitionen n→0 und 0→p kapazitive bzw. ARCP unterstützte kapazitive Kommutierungen.

Es ist in erster Näherung unerheblich für das Funktionieren des ARCP Prinzips, ob die Nullzustände "0₊" oder "0₋" gewählt werden. Der damit verbundene Freiheitsgrad, der zur Ladungssteuerung an den potentialvariablen Zwischenkreiskapazitäten genutzt werden kann, ist damit nicht eingeschränkt.

Hart schaltende Mehrpunktstromrichter mit potentialvariablen Zwischenkreiskapazitäten können gemäß den oben beschriebenen Erweiterungen zu einem ARCP Stromrichter mit potentialvariablen Zwischenkreiskapazitäten modifiziert werden. Die in diesen Stromrichtern möglichen Kommutierungen entsprechen den beschriebenen drei Kommutierungstypen - der ARCP Kommutierung, der kapazitiven Kommutierung und der ARCP unterstützten kapazitiven Kommutierung. Generell findet bei Kommutierungen mit positivem Leistungsgradient am Ausgang eine ARCP Kommutierung statt, während bei Kommutierungen mit negativem Leistungsgradient am Ausgang eine kapazitive bzw. eine ARCP unterstützte kapazitive Kommutierung stattfindet.

Da die Kommutierung zwischen den verschiedenen Ausgangsspannungsniveaus im normalen Betrieb zwischen zwei benachbarten Niveaus erfolgt, sind in der Regel auch nur zwei Hauptschalter an der Kommutierung beteiligt. Damit kann die Kommutierung auf eine ursprüngliche ARCP Kommutierungszelle zurückgeführt werden. Die beim ARCP Mehrpunktstromrichter mit potentialvariablem Zwischenkreis in dem ARCP Kommutierungskreis liegenden potentialvariablen Zwischenkreiskapazitäten beeinflussen die ARCP Kommutierung nicht, solange deren Kapazitätswert in Größenordnungen über dem Kapazitätswert der Entlastungskapazitäten der Hauptschalter liegt.

Die korrekte Identifikation des für eine ARCP Kommutierung bzw. für die ARCP unterstützte kapazitive Kommutierung benötigten Hilfsschalters kann durch Ermittlung der für die Kommutierung wirksamen Kommutierungszelle erfolgen. Zwischen dem Mittelpunkt der zwei Teilkapazitäten, die diese Kommutierungszelle formen und der nächst inneren Zelle, gekennzeichnet durch die nächst kleinere Spannung an der potentialvariablen Kapazität, bzw. dem Ausgangsanschluß ist der zu aktivierende Hilfszweig angeschlossen. Darauf basierend ist die korrekte Steuerung der Kommutierungen, die einen der ARCP Hilfszweige involviert, auch in mehrphasigen Mehrpunktstromrichtern mit mehr als 3 Punkten relativ einfach möglich.

**Patentansprüche**

1.  ARCP Dreipunkt- oder Mehrpunktstromrichter

    -   mit einer Reihenschaltung von mindestens vier Hauptschaltern ($S_1...S_8$) pro Stromrichterphase, welche elektrisch parallel zwischen einer positiven und einer negativen Gleichspannungsschiene (2, 4) geschalten sind,
    -   wobei elektrisch parallel zu jedem einzelnen Hauptschalter ($S_1...S_8$) eine einzelne Entlastungskapazität ($C_1...C_8$) geschalten ist,
    -   wobei zwischen den Gleichspannungsschienen (2, 4) zwei gleich große Zwischenkreiskapazitäten ($C_{DC1}$, $C_{DC2}$) angeordnet sind, deren Spannungsmittelpunkt (0) verfügbar ist,
    -   wobei die Verbindungspunkte (7, 17, 27, 9, 19, 49) jeweils benachbarter Hauptschalter ($S_1...S_8$), welche nicht gleichzeitig den Ausgang (10) der Stromrichterphase bilden, über potentialvariable Zwischenkreiskapazitäten zur Bildung von Kommutierungszellen in hinsichtlich der positiven und negativen Gleichspannungsschiene (2, 4) symmetrischer Weise miteinander verbunden sind,
    -   wobei jede potentialvariable Zwischenkreiskapazität in zwei gleich große Teilkapazitäten ($C_{DC3}$ und $C_{DC4}$, $C_{DC5}$ und $C_{DC6}$, $C_{DC7}$ und $C_{DC8}$) aufgeteilt ist, deren Verbindungpunkte als Spannungsmittelpunkte (1, 3, 5) verfügbar sind,
    -   wobei der Ausgang (10) der Stromrichterphase mit einer Resonanz-Induktivität ($L_{aux}$) verbunden ist, deren weiterer Anschluß jeweils über einen eigenen unabhängig steuerbaren bidirektionalen Hilfsschalter ($S_{aux1}$, $S_{aux2}$, $S_{aux3}$, $S_{aux4}$) mit allen Spannungsmittelpunkten (0, 1, 3, 5) verbunden ist (Fig. 9).

2.  ARCP Mehrpunktstromrichter

    -   mit einer Reihenschaltung von mehr als vier Hauptschaltern ($S_1...S_8$) pro Stromrichterphase, welche elektrisch parallel zwischen einer positiven und einer negativen Gleichspannungsschiene (2, 4) geschalten sind,
    -   wobei elektrisch parallel zu jedem einzelnen Hauptschalter ($S_1...S_8$) eine einzelne Entlastungskapazität ($C_1...C_8$) geschalten ist,
    -   wobei zwischen den Gleichspannungsschienen (2, 4) zwei gleich große Zwischenkreiskapazitäten ($C_{DC1}$, $C_{DC2}$) angeordnet sind, deren Spannungsmittelpunkt (0) verfügbar ist,
    -   wobei die Verbindungspunkte (7, 17, 27, 9, 19, 49) jeweils benachbarter Hauptschalter ($S_1...S_8$), welche nicht gleichzeitig den Ausgang (10) der Stromrichterphase bilden, über potentialvariable Zwischenkreiskapazitäten zur Bildung von Kommutierungszellen in hinsichtlich der positiven und negativen Gleichspannungsschiene (2, 4) symmetrischer Weise miteinander verbunden sind,
    -   wobei jede potentialvariable Zwischenkreiskapazität in zwei gleich große Teilkapazitäten ($C_{DC3}$ und $C_{DC4}$,

$C_{DC5}$ und $C_{DC6}$, $C_{DC7}$ und $C_{DC8}$) aufgeteilt ist, deren Verbindungpunkte als Spannungsmittelpunkte (1, 3, 5) verfügbar sind,

- wobei der Spannungsmittelpunkt (0) der Zwischenkreiskapazitäten ($C_{DC1}$, $C_{DC2}$) über einen unabhängig steuerbaren bidirektionalen Hilfsschalter ($S_{aux1}$) und eine Resonanz-Induktivität ($L_{aux1}$) mit dem Spannungsmittelpunkt (1) der nächstliegenden Kommutierungszelle verbunden ist, der Ausgang (10) der Stromrichterphase über einen unabhängig steuerbaren bidirektionalen Hilfsschalter ($S_{aux4}$) und eine Resonanz-Induktivität ($L_{aux4}$) mit dem Spannungsmittelpunkt (5) der nächstliegenden Kommutierungszelle verbunden ist und die Spannungsmittelpunkte (1, 3, 5) jeweils benachbarter Kommutierungszellen über einen unabhängig steuerbaren bidirektionalen Hilfsschalter ($S_{aux2}$, $S_{aux3}$) und eine Resonanz-Induktivität ($L_{aux2}$, $L_{aux3}$) miteinander verbunden sind (Fig.2).

3. ARCP Dreipunkt- oder Mehrpunktstromrichter

- mit einer Reihenschaltung von mindestens vier Hauptschaltern ($S_1...S_8$) pro Stromrichterphase, welche elektrisch parallel zwischen einer positiven und einer negativen Gleichspannungsschiene (2, 4) geschalten sind,
- wobei elektrisch parallel zu jedem einzelnen Hauptschalter ($S_1...S_8$) eine einzelne Entlastungskapazität ($C_1...C_8$) geschalten ist,
- wobei zwischen den Gleichspannungsschienen (2, 4) mindestens drei Zwischenkreiskapazitäten ($C_{dc1}$, $C_{dc2}$, $C_{dc3}$, $C_{dc4}$, $C_{dc5}$) angeordnet sind, deren Kapazitätswerte derart gewählt sind, daß Spannungsabgriffe (1, 3, 11, 12, 13, 14) entstehen, deren Spannungsniveaus in der Mitte der am Ausgang der Stromrichterphase einstellbaren Spannungsniveaus liegen,
- wobei die Verbindungspunkte (7, 17, 27, 9, 19, 49) jeweils benachbarter Hauptschalter ($S_1...S_8$), welche nicht gleichzeitig den Ausgang (10) der Stromrichterphase bilden, über potentialvariable Zwischenkreiskapazitäten ($C_{dc4}$, $C_{dc6}$, $C_{dc7}$, $C_{dc8}$) zur Bildung von Kommutierungszellen in hinsichtlich der positiven und negativen Gleichspannungsschiene (2, 4) symmetrischer Weise miteinander verbunden sind,
- wobei der Ausgang (10) der Stromrichterphase mit einer Resonanz-Induktivität ($L_{aux}$) verbunden ist, deren weiterer Anschluß jeweils über einen eigenen unabhängig steuerbaren bidirektionalen Hilfsschalter ($S_{aux1}$, $S_{aux2}$, $S_{aux3}$, $S_{aux4}$) mit allen Spannungsabgriffen (1, 3, 11, 12, 13, 14) verbunden ist (Fig. 10, 11).

Fig. 1

Fig. 2

Fig. 3

Fig. 4

**Fig. 5**

**Fig. 6**

⑤      ⑥      ③      ④

$S_1$

$S_2$

$S_3$

$S_4$

$S_{aux1}$

$S_{aux2}$

**Fig. 7**

⑤      ⑥      ③      ④

$i_{S1}$

$i_{C1}$

$i_{S2}$

$i_{C2}$

$i_{Saux1}$

$i_{Saux2}$

**Fig. 8**

16

Fig. 9

Fig. 10

Fig. 11

Fig. 9